# EUROPEAN PATENT APPLICATION

(11) **EP 2 466 534 A1**
(43) Date of publication of application: **20.06.2012**
(21) Application number: 10194970.9
(22) Date of filing: 14.12.2010
(51) Int. Cl.: G06Q 10/00

(54) **A computerized platform for selling tickets for sporting events that take place in a stadium**

(71) Applicant: Ticket2Final Ltd., Douglas Isle of Man IM1 4LS (GB)
(72) Inventor: Adamsky, Denis, 119049, Moscow (RU)
(74) Representative: Virdee-Crofts, Kulwinder Kaur

(57) **Abstract**

A system for ordering tickets for sporting events that are taking place in a stadium is provided herein. In an early bird stage, a seat allocation function calculates an amount of seats in the stadium for each fan club and offers it as a service order. Parameters of the seat allocation function are constant and variable for each ticket order. A seat allocation is performed for each specified combination of the sporting event of the team that the fan admires versus other teams. The ticket order is provided as a service order to fans who wish to reserve a seat and to pay official price for the ticket in case the team the fan admires will play in the specified sporting event. A ticket is sold in an official price for every ticket service order, and seats for each fan club are being allocated in separate zones of the stadium.

## Description

### BACKGROUND OF THE INVENTION

### 1. Field Of Invention

This invention relates to a system and method for selling tickets for sporting events, possibly specified by the fan which are taking place in a stadium; and more particularly, to a system and method for selling tickets combining an early bird ticket order as a service order and formatting a separate section for each fan club in the stadium.

### 2. Description of Related Art

There are many different known ways to offer prospective buyers tickets to sporting events. One patented way is to reserve future purchases of goods or services using plural electronic options with associated option fees as read in European Patent Publication No. EP2225673A1: METHOD AND SYSTEM FOR RESERVING FUTURE PURCHASES OF GOODS OR SERVICES prior date 2007-12-21. However, the patented way of selling future purchases of goods or services is not customized to special needs of organizing bodies of sporting events taking place in stadiums.

The existing art may tackle some administrative issues such as how many seats should be allocated for fans of each team, the level of rivalry between the fans of opponent teams may require special security arrangements, the distance of origin location of fans from the stadium may influence on the demand for tickets and the like.

These administrative issues may get resolved, when the following decision-making information in an early stage of a season of sporting events, is provided: 1) Identity of the teams that will play in the sporting event is not known. 2) Level of traditional rivalry between the fans of the teams that play in the sporting events. 3) The extent of attractiveness of the teams that play in the sporting event, for prospective ticket-buyer 4) The distance between origin location of prospective ticket-buyers and the stadium where the sporting event is taking place.

The present invention provides a solution to the aforementioned decision-making information that is not known and may resolve administrative issues in the art.

Prior to setting forth the background of the related art, it may be helpful to set forth definitions of certain terms that will be used hereinafter.

The term "Sporting event" as used herein in this application, is defined as any sporting event specified by a fan.

The term "Stadium" as used herein in this application, is defined as any venue that is arranged for carrying out any sporting event.

The term "Final game" as used herein in this application, is defined as a single occasion or a definite portion of a sporting event.

### SUMMARY OF INVENTION

The present invention provides a system and methods for an early bird order of tickets for sporting events, possibly specified by the fan which that are taking place in a stadium and formatting a section for fans of each team in the stadium.

### Sale of Tickets in an Official Price

In many sporting events the fans of the teams that play in a sporting event, in a non-limiting example, in a final game, pay an exorbitant price when buying a ticket close to the date of the final game. The reason for the exorbitant price is that in most tournaments the demand for tickets exceeds the supply. When implementing the present invention the fans of the teams that will reach final games may be able to guarantee seats in the stadium in an official price.

### Security During Sporting Events

An interaction between the rival teams in the stadium, during the sporting event, may lead to verbal and physical violence. The present invention may minimize the interaction between the rival teams and may contribute to the sense of belonging of the fans, by organizing the fans of each team in a separate section of the stadium.

### BRIEF DESCRIPTION OF THE DRAWING

The drawings, not drawn to scale, include the following Figures:
**Figure 1****:** shows a graph of a price increase over time, according to existing art;
**Figure 2A****:** shows an illustration of a stadium in which the Seats of team A and team B are mixed in some zones, according to existing art;
**Figure 2B****:** shows an illustration of a stadium in which the seats of team A and team B are in Different Zones, according to some embodiments of the invention;
**Figure 3****:** is a block diagram illustrating a process of ticket's order and seats allocation in the stadium, according to some embodiments of the invention;
**Figure 4****:** shows a personalized ticket, according to some embodiments of the invention.

### DETAILED DESCRIPTION OF INVENTION

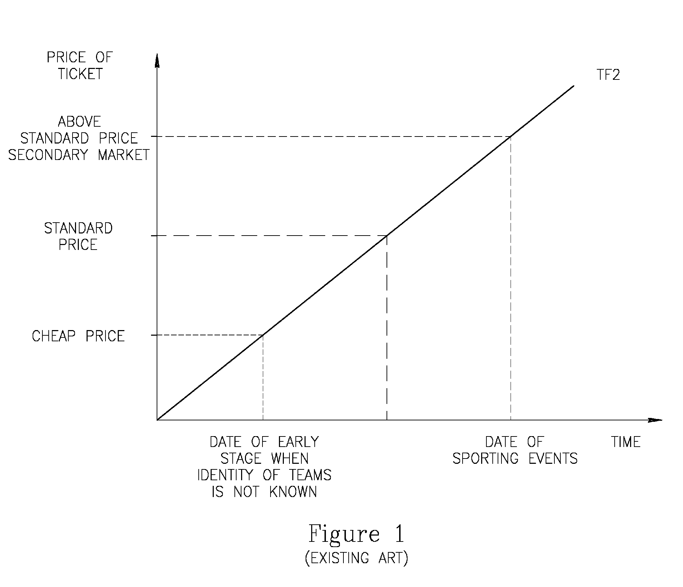

### Figure 1: An Increase in Price over Time

**Figure 1** shows a graph of a price increase over time, according to existing art. The graph shows a cheap price of a ticket in an early stage of a season of sporting events. In the early stage, the identity of the teams reaching and playing in a sporting event, for example, a final game is not known. There is an increase in the price of the ticket over time.

As getting closer to the date of the final game, the price of the ticket exceeds an official price and the ticket is sold in an exorbitant price in legal market and secondary market, according to existing art.

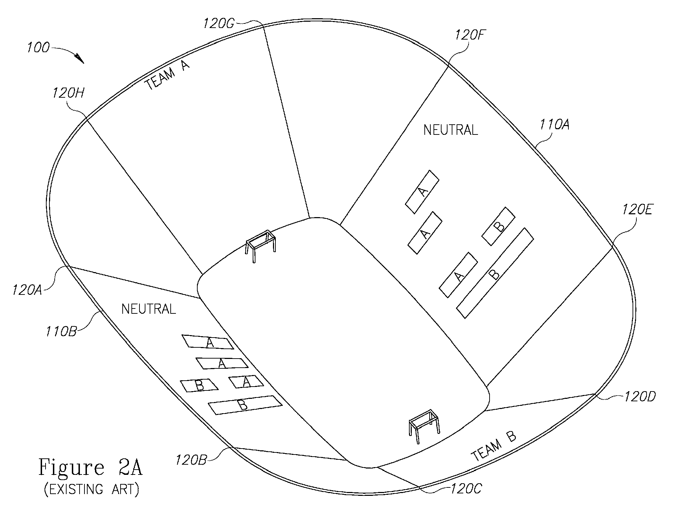

### Figure 2A: The Seats for Fans of Team A and Team B are Mixed in some zones in the Stadium, according to existing art.

**Figure 2A** shows an illustration of a stadium in which the seats for the fans of team A and the seats for the fans of team B are mixed in some zones. Aisles **120A, 120B, 120C, 120D, 120E, 120F, 120G** and **120H** divide the stadium into zones. In zones **110A** and **110B** fans of team A sit close to fans of team B, according to existing art.

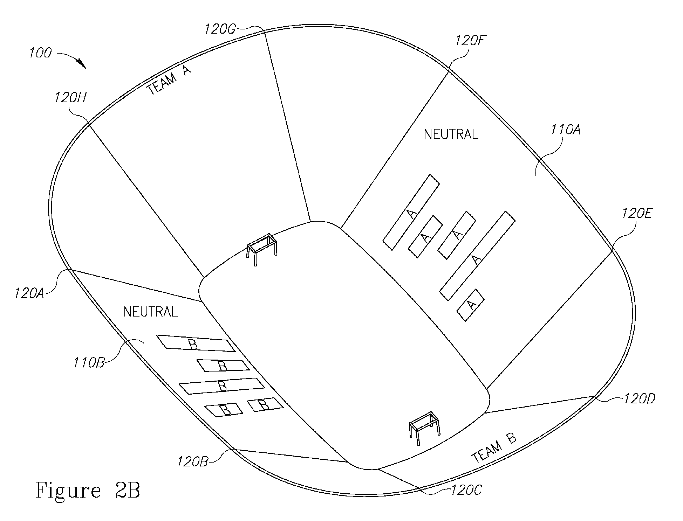

### Figure 2B: The seats for Fans of Team A and Team B are in Different Zones

**Figure 2B** shows an illustration of a stadium in which the seats for fans of team A and the seats of fans of team B are in Different Zones. Aisles **120A, 120B, 120C 120D, 120E, 120F, 120G** and **120H** divide the stadium into zones, a result of some embodiments of the present invention.

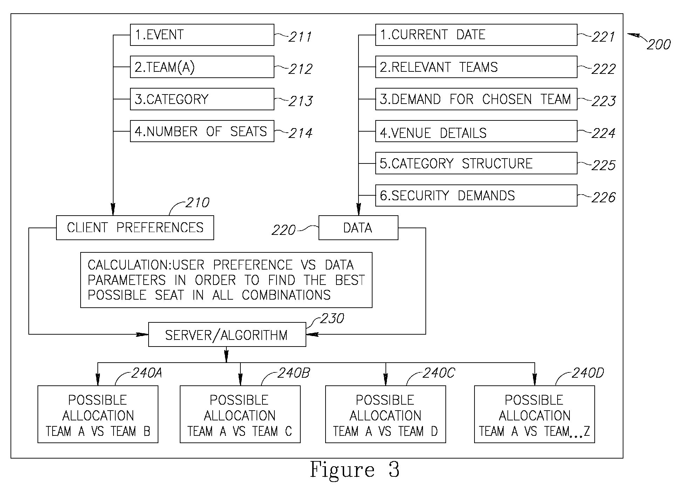

### Figure 3: A Process of Ticket's Order and Seats Allocation in the Stadium

**Figure 3** is a block diagram of a process of ticket's order and optimal seats allocation in the stadium, according to some embodiments of the invention.

An algorithm running on server **230** simulates all possible game combinations of teams playing in a sporting event, in a non-limiting example, a final game and reserves a variety of all possible allocations of seats in all game combinations of games **240A, 240B, 240C, 240D.**

Preferences of prospective ticket-buyers **210** are taken as parameters into the algorithm running on server **230.** The parameters are: event details **211,** identity of team **212,** category **213,** and number of seats that needs to be reserved for the fans of the team **214.**

Data parameters **220** are taken as parameters into the algorithm running on server **230.** The parameters are: current date **221,** relevant team **222,** demand for chosen team **223,** venue details **224,** category structure **225** and security demands **226.**

The algorithm that is running on server **230** in **Figure 3** performs an analysis of the zones in the stadium by the Aisles **120A, 120B, 120C 120D, 120E, 120F, 120G** and **120H** in **Figures 2A** and **2B****.** The analysis combines security demands **226** in **Figure 3** including general and specific demands. An example of a general security demand may be not mixing fans of different teams in specified zones in the stadium. An example of a specific demand may be that fans of a specific team may not sit in a zone next to fans of another team.

According to the analysis, the algorithm that is running on server **230** in **Figure 3** allocates a certain amount of tickets for the fans of each team in each game combination. The number of tickets per each group of fans is calculated based on constant and variable parameters.

An example of constant parameter that may be taken into account when calculating the number of tickets allocated per each group of fans is a number of potential fans that may be considered as prospective ticket-buyers. Another example, of constant parameter is a distance of the stadium where the final game is taking place and the fans origin location. Yet another example of a constant parameter is the level of competiveness, i.e. traditional rivalry between two fan clubs.

An example of a variable parameter that may be taken into account when calculating the number of tickets that is allocated per each group of fans is the accomplishments of the team in a certain point in time. Fans are more likely to become ardent devotees and buy tickets to the final game when the team achieved high accomplishments, rather than the fans of a team with low achievements.

Another example of a variable parameter that may be taken into account when calculating the number of tickets that is allocated per each group of fans is drop of teams during a tournament.

Yet another example of a variable parameter that may be taken into account when calculating the number of tickets that is allocated per each group of fans is an injury or dereliction of a key player.

The algorithm that is running on server **230** in **Figure 3** allocates a seat in every game combination at the time a ticket is booked in the early bird stage. In case an allocation of a seat in one of the games combinations is not possible the order is listed under a waiting list and the pre-sale is stopped. The situation may change in the wake of one of the variable parameters hence the pre-sale may continue.

The algorithm that is running on server **230** in **Figure 3** may have the ability to respond to high demand of tickets of a certain fans club. The response may be an evacuation of a zone in favor of the fans club according to the other parameters.

The result of the usage of the algorithm that is running on server **230** in **Figure 3** is a separation of the two fan clubs by a placement in the stadium in different zones. Another result of the usage of the algorithm that is running on server **230** in **Figure 3** is an early bird ticket order as a service order to the final game in an early bird stage, without knowing the identity of the teams that will reach and play the final game.

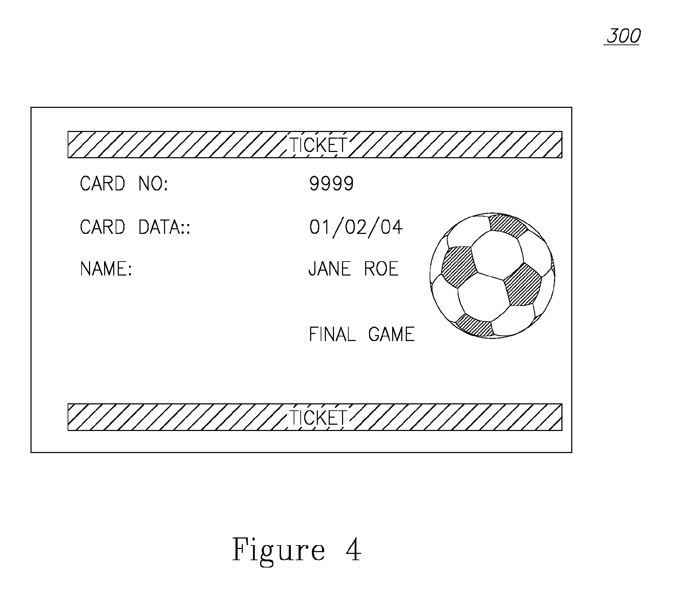

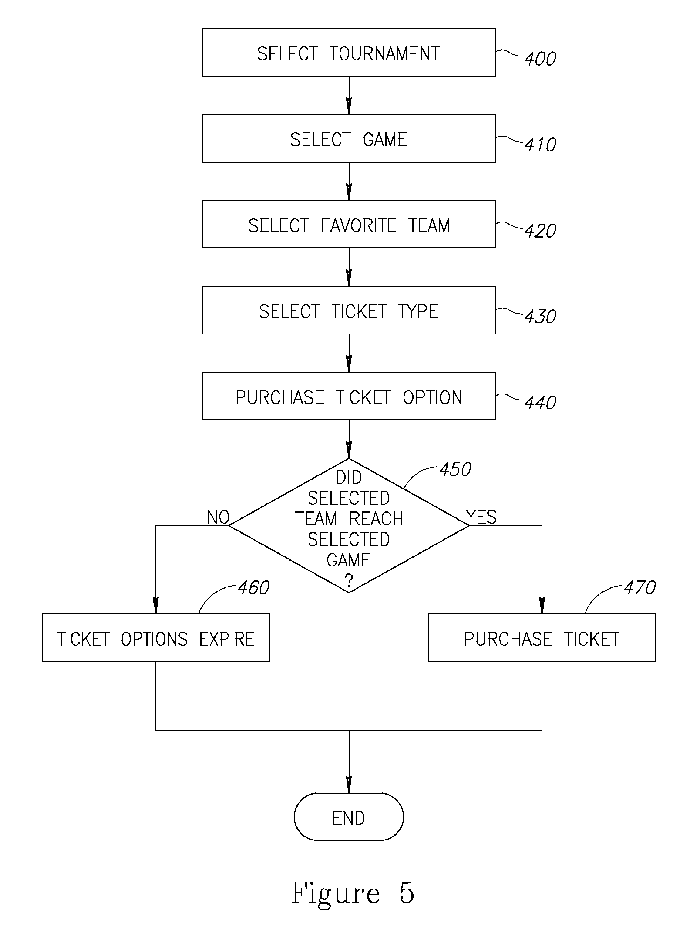

### Figure 4: A Personalized Ticket

**Figure 4****:** shows a personalized ticket that may be sold for each buyer, according to some embodiments of the invention. The personalized ticket may include identification details of the buyer such as a name, an ID, and a photo. These identification details may be used as security check in the entrance to an event that is taking place in a stadium.

Further, the personalized ticket may have a collection value to the fans.

## Claims

1. A method of ordering tickets by a fan, in an early bird stage, for specified sporting events that are taking place in a stadium, **characterized by** applying a seat allocation function configured to calculate, based on parameters, an amount of seats for each fan club in the stadium in the early bird stage, in response to a service order made by a fan specifying a team; and
generating a personalized ticket after a ticket purchase, wherein the ticket purchase only takes place after the teams participating in the specified sporting event are known,
wherein the parameters of the seat allocation function are constant and variable,
wherein an official price is charged for each service order, when the teams participating in the specified sport event are known,
wherein the seat allocation function allocates one or more seats for a ticket order for each specified sporting event game combination of the specified team and other teams, and
wherein that seat allocation function allocates seats for fans of different teams in separate zones of the stadium.

2. The method according to claim 1, wherein in the early stage the identity of the teams that will play in the sporting event is not known.

3. The method according to claim 1, wherein the constant parameters are stationary over time and include at least one of: preferences of ticket order and security demands of the stadium.

4. The method according to claim 1, wherein the variable parameters are varying over time and include at least one of: preferences of ticket order and security demands of the stadium.

5. The method according to claim 1, wherein the personalized ticket includes identification details of the fan.

6. The method according to claim 1, wherein the personalized ticket is generated in a specified format to distinguish it from fake tickets and further includes identification details.

7. The method according to claim 1, wherein the specified sporting event game combination is one of: uncertain combination and certain combination.

8. A system for ordering tickets by a fan, in an early bird stage, for specified sporting events that are taking place in a stadium , **characterized by** a seat allocation module configured to calculate, based on parameters, an amount of seats for each fan club in the stadium in the early bird stage, in response to a service order made by a fan specifying a team; and
a personalized ticket generating module configured to generate, after a ticket purchase, wherein the ticket purchase only takes place after the teams participating in the specified sporting event are known,
wherein the parameters of the seat allocation function are constant and variable,
wherein an official price is charged for each service order, when the teams participating in the specified sport event are known,
wherein the seat allocation function allocates one or more seats for a ticket order for each final game combination of the specified team and other teams, and
wherein that seat allocation function allocates seats for fans of different teams in separate zones of the stadium.

9. The system according to claim 8, wherein in the early stage, the teams that are about to participate in the specified sporting event are not yet identified.

10. The system according to claim 8, wherein the constant parameters are stationary over time and include at least one of: preferences of ticket order and security demands of the stadium.

11. The system according to claim 8, wherein the variable parameters are varying over time and include at least one of: preferences of ticket order and security demands of the stadium.

12. The system according to claim 8, wherein the personalized ticket includes identification details of the fan.

13. The system according to claim 8, wherein the personalized ticket is generated in a specified format to distinguish it from fake tickets and include identification details.

14. The system according to claim 8, wherein the specified sporting event game combination is one of: uncertain combination and certain combination.

## Amended claims

### Amended claims in accordance with Rule 137(2) EPC.

**1.** A method of ordering tickets by a fan, in an early bird stage, for specified sporting events that are taking place in a stadium , **characterized by** applying a seat allocation function configured to calculate, based on parameters, an amount of seats for each fan club in the stadium in the early bird stage, in response to a service order made by a fan specifying a team; and
generating a personalized ticket after a ticket purchase, wherein the ticket purchase takes place after the teams participating in the specified sporting event are known,
wherein the parameters of the seat allocation function comprise constant parameters and variable parameters,
wherein the seat allocation function allocates one or more seats for a ticket order for each specified sporting event game combination of the specified team and other teams, and
wherein the seat allocation function achieves a separation of each of the fan clubs by allocating seats for fans of corresponding teams in separate corresponding zones of the stadium.

**2.** The method according to claim 1, wherein in the early stage the identity of the teams that will play in the sporting event is not known.

**3.** The method according to claim 1, wherein the constant parameters are stationary over time and include at least one of: preferences of ticket order and security demands of the stadium.

**4.** The method according to claim 1, wherein the variable parameters are varying over time and include at least one of: preferences of ticket order and security demands of the stadium.

**5.** The method according to claim 1, wherein the personalized ticket includes identification details of the fan.

**6.** The method according to claim 1, wherein the personalized ticket is generated in a specified format to distinguish it from fake tickets and include identification details.

**7.** The method according to claim 1, wherein the specified sporting event game combination is at least one of: uncertain combination and certain combination.

**8.** A system for ordering tickets by a fan, in an early bird stage, for specified sporting events that are taking place in a stadium , **characterized by** a seat allocation module configured to calculate, based on parameters, an amount of seats for each fan club in the stadium in the early bird stage, in response to a service order made by a fan specifying a team; and
a personalized ticket generating module configured to generate, after a ticket purchase, wherein the ticket purchase takes place after the teams participating in the specified sporting event are known,
wherein the parameters of the seat allocation function comprise constant parameters and variable parameters,
wherein the seat allocation function allocates one or more seats for a ticket order for each final game combination of the specified team and other teams, and
wherein the seat allocation function achieves a separation of each of the fan clubs by allocating seats for fans of corresponding teams in separate corresponding zones of the stadium.

**9.** The system according to claim 8, wherein in the early stage, the teams that are about to participate in the specified sporting event are not yet identified.

**10.** The system according to claim 8, wherein the constant parameters are stationary over time and include at least one of: preferences of ticket order and security demands of the stadium.

**11.** The system according to claim 8, wherein the variable parameters are varying over time and include at least one of: preferences of ticket order and security demands of the stadium.

**12.** The system according to claim 8, wherein the personalized ticket includes identification details of the fan.

**13.** The system according to claim 8, wherein the personalized ticket is generated in a specified format to distinguish it from fake tickets and include identification details.

**14.** The system according to claim 8, wherein the specified sporting event game combination is at least one of: uncertain combination and certain combination.
